# DEMANDE DE BREVET EUROPEEN

(11) **EP 0 896 966 A1**
(43) Date de publication de la demande: **17.02.1999**
(21) Numéro de dépôt: 98401789.7
(22) Date de dépôt: 16.07.1998
(51) Int. Cl.: C08F 2/32

(54) **Nouveaux polymères associatifs et leur procédé de préparation par émulsion inverse**

(30) Priorité: 14.08.1997 FR 9710379
(71) Demandeur: ELF ATOCHEM S.A., 92800 Puteaux, Hauts-de-Seine (FR)
(72) Inventeur: Mallo, Paul, 78400 Chatou (FR); Candau, Françoise, 67000 Strasbourg (FR); Corpart, Jean-Marc, 95110 Sannois (FR); Pabon, Martial, 92400 Courbevoie (FR); Collette, Christian, 75005 Paris (FR); Selb, Joseph, 67270 Kienheim (FR)

(57) **Abrégé**

Des nouveaux polymères associatifs acryliques ont été préparés par polymérisation radicalaire en émulsion inverse.

Ces polymères renferment un monomère acrylique spécial. Il s'agit d'un ester méthacrylique dont le radical est constitué d'un segment hydrophile et d'un segment hydrophobe.

Les polymères associatifs de l'invention peuvent être utilisés comme épaississants, agents de floculation ou agents de rétention de charges.

## Description

La présente invention concerne des nouveaux polymères associatifs destinés à augmenter la viscosité des solutions aqueuses, leur procédé de synthèse ainsi que les solutions aqueuses contenant ces polymères.

Les polymères hydrosolubles viscosifiants sont utilisés dans différents domaines tels que les peintures, les colles et adhésifs, le bâtiment, le textile et le papier.

Les compositions aqueuses et/ou pigmentées auxquelles a souvent à faire l'homme de l'art, par exemple les peintures aqueuses, sont constituées d'une phase liquide qui peut être de l'eau ou un mélange d'eau avec un solvant organique miscible à l'eau, d'un polymère dispersé dans la phase liquide, nommé couramment "liant", de charges et/ou de pigments, d'un agent dispersant des charges et/ou pigments qui peut être un polymère hydrosoluble, ainsi que de divers adjuvants tels que agents de coalescence, biocides, antimousses ou autres, enfin d'un ou plusieurs agents viscosifiants (ou épaississants) qui sont des polymères naturels ou de synthèse.

En général les polymères augmentent la viscosité des solutions dans lesquelles ils sont dissous. Les polymères hydrosolubles généralement utilisés comme viscosifiants de solutions aqueuses ont des structures variées ; on peut citer les polyacrylamides, éventuellement partiellement hydrolysés, les poly(méth)acrylates de sodium et leurs copolymères, les dérivés de la cellulose, les polyoxydes d'éthylène ou encore les polysaccharides.

Cependant, l'utilisation des polymères hydrosolubles conventionnels reste limitée. En effet, pour avoir des bonnes propriétés viscosifiantes le polymère hydrosoluble doit avoir une masse moléculaire élevée. Mais la plupart des applications industrielles citées précédemment imposent de soumettre la solution aqueuse contenant le polymère viscosifiant à un fort gradient de cisaillement. Ceci cause souvent la dégradation du polymère entraînant la réduction de sa masse moléculaire et la diminution de son pouvoir viscosifiant.

Certes, les polymères de faible masse sont moins sensibles aux sollicitations mécaniques mais ils doivent être utilisés en forte concentration ce qui est le plus souvent incompatible avec les applications industrielles.

Les polymères naturels comme les dérivés de la cellulose sont quant à eux sensibles aux attaques microbiennes et nécessitent l'ajout d'agents antimicrobiens.

Pour améliorer les performances des polymères hydrosolubles, on a développé des polymères associatifs qui selon la définition qu'en donne l'Encyclopedia of Polymer Science and Engineering, 2nd edition 17, 772-779 sont des polymères hydrosolubles contenant des groupements non polaires qui se rassemblent en agrégats dans les milieux polaires. Ils sont constitués d'un squelette comportant majoritairement des motifs à caractère hydrophile et de façon minoritaire des séquences hydrophobes. De telles structures mises en solutions aqueuses'voient leurs pôles hydrophobes se regrouper afin de limiter les interactions eau/séquences hydrophobes. La formation de tels noeuds de réticulation physique peut aboutir à la création d'un véritable réseau. Le gel physique ainsi formé augmente considérablement la viscosité de l'eau. Dans le cas d'une composition aqueuse chargée et/ou pigmentée, les polymères associatifs agissent également par la création de liens divers entre eux-mêmes et certains constituants des compositions. Ils apportent alors aux compositions chargées et/ou pigmentées dans lesquelles ils sont ajoutés un comportement rhéologique moins pseudo-plastique et donc facilitant les applications.

Parmi les polymères associatifs, les épaississants associatifs polyuréthannes et les épaississants associatifs acryliques sont particulièrement connus.

Les agents associatifs polyuréthannes sont des copolymères à structure essentiellement tribloc, c'est-à-dire des molécules constituées de trois parties distinctes, la partie centrale hydrophile polymérisée et deux extrémités identiques ou non, constituées de groupements hydrophobes tels que, par exemple, les groupements alkyles, aryles, alkylaryles. De tels agents sont décrits dans de nombreux brevets comme par exemple dans les brevets US 3,770,684 ; US 4,079,028 et US 4,155,892.

Les agents associatifs acryliques ont une structure différente basée sur une chaîne principale à caractère hydrophile le long de laquelle sont distribués de façon statistique des motifs hydrophobes pendants. Ils sont le plus souvent obtenus par polymérisation en émulsion dans l'eau.

Les polyacryliques associatifs ne développent leur pouvoir épaississant ou viscosifiant qu'en milieu alcalin. De plus, compte tenu de leur condition de synthèse ils ne présentent pas de propriétés rhéologiques à effet seuil car leur masse moléculaire n'est pas assez élevée. Pour obtenir des polymères acryliques de haute masse moléculaire, la polymérisation en émulsion inverse est une méthode de choix bien connue de l'homme de l'art puisqu'elle allie une vitesse de réaction élevée à l'obtention de grandes masses moléculaires supérieures à 1 million. La polymérisation en émulsion inverse est aujourd'hui très employée au niveau industriel.

Elle a été utilisée également mais de manière beaucoup plus discrète pour la synthèse de (co)polymères acryliques associatifs. On peut citer à titre d'exemple le brevet US 4 921 903 qui enseigne l'art de synthétiser des terpolymères associatifs par polymérisation en émulsion inverse, mais en deux étapes. En pratique le groupement hydrophobe est incorporé par transamidation d'un copolymère hydrophile contenant des motifs monomère amide.

Le brevet US 4 918 123 enseigne la manière d'introduire de l'octylacrylamide en tant que monomère hydrophobe dans une émulsion eau/huile contenant des motifs dérivés d'un monomère non ionique tel que l'acrylamide et d'un monomère cationique tel que le chlorure de 3 méthacrylamido propyl triméthyl ammonium. Cette incorporation se fait à l'aide d'un tiers solvant alcool et en utilisant un inhibiteur de polymérisation soluble dans la phase huile afin de prévenir toute polymérisation du monomère hydrophobe dans la phase huile. Bien souvent l'utilisation d'un alcool n'est pas souhaitable pour l'application finale.

Comme on peut l'observer à la lecture de l'art antérieur, l'obtention par la technique de polymérisation en émulsion inverse de polymère associatif acrylique de haute masse moléculaire n'est pas chose aisée. Les procédés décrits sont peu industriels, nécessitent l'utilisation d'additif co-solvant dont la présence est quelquefois une gêne pour l'utilisateur final ou requièrent la préparation de tensioactifs particuliers destinés uniquement à cet usage (EP 172 015 et EP 172 724), ce qui a pour conséquence d'augmenter le prix de ce type de produit. De plus, compte tenu de la difficulté à optimiser la stabilité finale ainsi que son aptitude à l'inversion, il est très complexe de modifier les paramètres de polymérisation pour les adapter à de nouveaux besoins en propriétés finales du polymère.

Tout ceci s'ajoute aux inconvénients classiques de l'émulsion inverse, c'est-à-dire le manque de stabilité dans le temps et la large distribution des tailles de particules.

On a maintenant trouvé que les problèmes cités précédemment tels que la non stabilité de l'émulsion ou l'usage d'un solvant peuvent être résolus par la technique de polymérisation en émulsion inverse.

La demanderesse a trouvé et mis au point de nouveaux polymères acryliques associatifs synthétisés par polymérisation en émulsion inverse et dont l'obtention ne nécessite ni l'utilisation de co-solvant, ni la synthèse de tensio-actif particulier.

Les compositions contenant les polymères associatifs de l'invention peuvent être utilisées comme floculant et/ou agent de rétention de charges.

Ces polymères sont constitués de squelettes polymères hydrophiles dans lesquels on a incorporé un monomère (méth)acrylique particulier. Celui-ci est un ester d'un acide (méth)acrylique dont le radical est constitué d'une partie hydrophile et d'une partie hydrophobe. La partie hydrophile facilite l'introduction du monomère dans la phase aqueuse et par conséquent l'incorporation du monomère dans le polymère, la partie hydrophobe apporte la qualité nécessaire à l'application en tant que polymère associatif.

Les monomères acryliques spéciaux selon l'invention répondent à la formule générale suivante 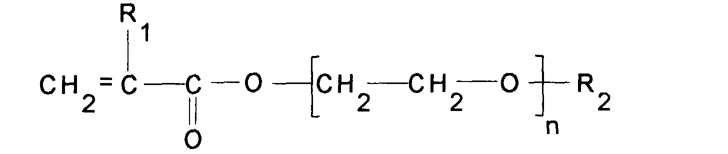 dans laquelle
R₁ = H ou CH₃
n est un nombre entier compris entre 2 et 50 et préférentiellement entre 8 et 18
R₂ est le 2,4,6 triphénéthyl benzène.

Le monomère spécial préféré de l'invention est le méthacrylate de polyoxyéthylène 2,4,6 triphénéthyl benzène éthoxylé à 12 moles d'oxyde d'éthylène (n = 12).

Selon une première forme, l'invention consiste à décrire des polymères associatifs obtenus sous forme de latex inverse par polymérisation en émulsion inverse. Une autre forme de l'invention est le procédé de synthèse de ces polymères acryliques associatifs.

Les polymères acryliques associatifs selon l'invention sont préférentiellement des polymères constitués d'un ou plusieurs monomère(s) éthylénique(s) neutre(s), d'un ou plusieurs monomère(s) anionique(s), du méthacrylate de polyoxyéthylène 2,4,6 triphénéthyl benzène et optionnellement d'un monomère polyinsaturé.

On peut également incorporer des monomères cationiques.

Les polymères acryliques associatifs de l'invention sont dispersés sous la forme de particules de diamètre inférieur à 500 nm. Ils contiennent :
- de 95 à 99,95 % en mole de motifs dérivés d'au moins un monomère choisi dans le groupe constitué de monomères éthyléniques neutres, anioniques et/ou cationiques,
- de 0,05 à 5 % en mole de motifs dérivés d'au moins un monomère acrylique contenant un radical 2,4,6 triphénéthyl benzène, et
- de 0 à 0,2 % en mole de motifs dérivés d'au moins un monomère polyinsaturé.

Selon une forme avantageuse les polymères associatifs contiennent de 0,05 % à 5 % molaire de méthacrylate de polyoxyéthylène 2,4,6 triphénéthyl benzène.

Les monomères non ioniques éthyléniques sont choisis préférentiellement parmi l'acrylamide, le méthacrylamide, les N,N dialkylacrylamides, les N-alkylacrylamides, le N-vinyl méthacétamide, le N-vinyl méthylformamide, le N-vinyl pyrrolidone et leurs mélanges. L'acrylamide est un choix particulièrement judicieux.

Les monomères anioniques sont choisis préférentiellement parmi l'acide acrylique, l'acide méthacrylique, l'acide 2-acrylamido, 2-méthyl propane sulfonique et leurs sels sodiques, potassiques ou ammoniacaux.

Les monomères cationiques sont choisis préférentiellement parmi les esters cationiques de l'acide (méth)acrylique tels que le diméthyl amino éthyl (méth)acrylate, le diméthyl amino propyl (méth)acrylate, le diéthyl amino éthyl (méth)acrylate, le diéthyl amino propyl (méth)acrylate, les sels de ces esters ainsi que leurs dérivés ammoniums quaternaires. Un exemple typique de ces monomères est le chlorure d'acryloyloxyéthyl triméthylammonium, fabriqué et commercialisé par ATOCHEM sous la référence ADAMQUAT MC.

On peut également choisir des dérivés cationiques de l'acrylamide et du méthacrylamide. On peut en citer le diméthyl amino éthyl acrylamide et ses sels, le diméthyl amino éthyl méthacrylamide et ses sels.

Un monomère polyinsaturé peut être ajouté si l'on souhaite obtenir un polymère acrylique associatif réticulé. Un tel monomère peut être un dérivé di-acrylamide tel que le méthylène-bis acrylamide, un di-acrylate tel que le di-acrylate d'éthylène glycol, un composé di-allylique tel que l'acide diallylacétique ou le diallyl phtalate.

Le procédé de préparation des latex inverses de l'invention est défini d'une manière générale par les étapes suivantes :
a) on prépare une émulsion de type eau dans huile en mélangeant très vigoureusement :
   une solution aqueuse contenant les monomères à polymériser avec une phase huileuse contenant au moins un liquide hydrocarboné et un tensio-actif dont la balance hydrophile-lipophile (HLB) est de 3 à 10 (dans le cas d'un mélange de tensio-actifs, il s'agit du HLB résultant). Comme tensio-actif on peut citer par exemple le monooléate de sorbitan, le sesquioléate de sorbitan ou leurs mélanges, de même que le mélange commercialisé par ICI sous la référence Hypermer 1083,
b) on soumet l'émulsion inverse obtenue à des conditions de polymérisation jusqu'à polymérisation complète et obtention d'un latex inverse stable.

Dans les formulations d'émulsion inverse conduisant au latex inverse de l'invention, la phase aqueuse contenant les monomères décrits précédemment se caractérise par une teneur totale en monomères comprise entre 20 et 60 % et plus particulièrement entre 30 % et 50 % en poids.

La phase organique peut consister en un hydrocarbure ou en un mélange d'hydrocarbures. Parmi ceux-là, les hydrocarbures ou les mélanges d'hydrocarbures isoparaffiniques sont les mieux adaptés. L'lsopar M commercialisé par la société EXXON est un bon exemple. Il est également possible d'utiliser des mélanges d'hydrocarbures paraffiniques, isoparaffiniques et naphténiques.

Le rapport pondéral des quantités de phase aqueuse et de phase organique est de 0,5 à 3 et de préférence de 0,8 à 1,2.

La polymérisation peut être effectuée de manière isothermique ou quasi adiabatique.

Les initiateurs peuvent être par exemple l'azo-bis-iso-butyronitrile, l'acide 2,2' cyanopentavalérique, si l'on choisit de conduire isothermiquement la polymérisation, ou choisis parmi les couples rédox suivants : persulfate-métabisulfite, eau oxygénée-acide ascorbique, persulfate-acide ascorbique, hydroperoxydes organiques-métabisulfite de sodium.

### Exemple N° 1

72,76 g de sesquioléate de sorbitan sont dispersés sous agitation dans 227,2 g d'lsopar M (phase organique).

Parallèlement à cette opération, on prépare sous agitation la phase aqueuse suivante en ajoutant successivement :
- 250 g d'eau bi-permutée
- 103,6 g d'acide acrylique glacial
- 97,8 g d'une solution aqueuse à 50 % d'hydroxyde de sodium (cet ajout est réalisé de manière à ne pas élever de manière excessive la température de polymérisation)
- 124,9 g d'acrylamide
- 0,75 g d'une solution aqueuse à 40 % de diéthylène triamine Penta acétate de sodium
- 0,049 g de Méthylène-bis-acrylamide
- 6,8 g de méthacrylate de polyoxyéthylène 2,4,6 triphénéthyl benzène éthoxylé à 12 moles d'oxyde d'éthylène
- de l'eau bi-permutée de manière à amener la masse totale de phase aqueuse à 670 g.
Les deux phases sont alors mélangées vigoureusement à l'aide d'un appareil de type Ultra-turrax jusqu'à l'obtention d'une émulsion de viscosité Brookfield (axe 4, v = 20) de 2600 mPa.s.
L'émulsion est alors placée dans un réacteur de polymérisation équipé d'un agitateur, d'un système d'introduction d'azote gazeux, et d'un dispositif permettant l'introduction de réactifs.
L'émulsion est alors désoxygénée et refroidie à environ 10°C.
on introduit ensuite dans le polymériseur :
- 0,05 g d'hydroperoxyde de cumène et
- 0,03 g de bisulfite de sodium.
La réaction démarre et on laisse monter la température.
On obtient, en fin de polymérisation, un latex inverse stable.

### Caractéristiques :

19,07 g de latex sont dispersés dans 480,93 g d'eau bi-permutée contenant 2 g de nonylphénol ethoxylé à 10 moles d'oxyde d'éthylène. L'ensemble est laissé sous agitation pendant 60 minutes.

La viscosité obtenue est de 75000 mPa.s (Brookfield axe 6, v = 20). On ajoute alors 7 ml d'une solution de chlorure de sodium à 70 g/l et on laisse sous agitation pendant 20 minutes. On obtient alors une viscosité de 15000 mPa.s.

On ajoute à nouveau 7 ml de la solution de chlorure de sodium à 70 g/l dans le bêcher comme précédemment. Après 10 minutes, on obtient une valeur de 4800 mPa.s pour la viscosité Brookfield (axe 6, v = 20).

### Exemple N° 1 comparatif

On reproduit le même essai mais sans incorporer le méthacrylate de polyoxyéthylène 2,4,6 triphénéthyl benzène oxyéthylé à 12 moles d'oxyde d'éthylène. Pour le reste, on procède exactement de la même façon.

Le produit obtenu a les caractéristiques suivantes :

| | |
|---|---|
| viscosité dans l'eau bi-permutée | 28000 mPa.s |
| viscosité après 1er rajout de 7 ml | 9000 mPa.s |
| viscosité après 2ème rajout de 7 ml | 3300 mPa.s |

### Exemple N° 2

On procède comme pour l'exemple n° 1 mais on remplace les 72,76 g de sesquioléate de sorbitan par 50 g d'Hypermer 1083 (commercialisé par ICI).

Par ailleurs, on met 11,2 g de méthacrylate de polyoxyéthylène 2,4,6 triphénéthyl benzène éthoxylé à 12 moles d'oxyde d'éthylène (n = 12) à la place de 6,8 g.

On obtient un produit ayant les caractéristiques suivantes :
- viscosité à 1 % de polymère dans l'eau bi-permutée : 61800 mPa.s
- viscosité de la solution précédente après 1er rajout de 7 ml de la solution de chlorure de sodium (70 g/l) : 11500 mPa.s
- viscosité de la solution précédente après 2ème rajout de 7 ml de la solution de chlorure de sodium (70 g/l) : 5000 mPa.s

### Exemple N° 2 comparatif

On procède comme à l'exemple n° 2 mais on n'incorpore pas de méthacrylate de polyoxyéthylène 2,4,6 triphénéthyl benzène oxyéthylé à 12 moles d'oxyde d'éthylène.

Pour le reste on procède identiquement.

Le produit obtenu a les caractéristiques suivantes :
- viscosité dans l'eau bi-permutée : 24000 mPa.s
- viscosité après 1er rajout de 7 ml : 8200 mPa.s
- viscosité après 2ème rajout de 7 ml : 2800 mPa.s

### Exemple N° 3

On reproduit l'exemple n° 1 en y enlevant le méthylène-bis-acrylamide. Le produit ainsi obtenu a les caractéristiques suivantes :
- viscosité dans l'eau bi-permutée : 38200 mPa.s
- viscosité après 1er rajout de 7 ml : 23250 mPa.s
- viscosité après 2ème rajout de 7 ml : 16500 mPa.s

### Exemple N° 3 comparatif

On enlève le méthacrylate de polyoxyéthylène 2,4,6 triphénéthyl benzène et on procède comme à l'exemple n° 3.

Le produit obtenu a les caractéristiques suivantes :
- viscosité dans l'eau bi-permutée : 4000 mPa.s
- viscosité après 1er rajout de 7 ml : 2500 mPa.s
- viscosité après 2ème rajout de 7 ml : 1500 mPa.s

## Revendications

1. Polymère acrylique associatif sous forme de latex inverse de particules de diamètre inférieur à 500 nm contenant :
- de 95 à 99,95 % en mole de motifs dérivés d'au moins un monomère choisi dans le groupe constitué de monomères éthyléniques neutres, anioniques et/ou cationiques,
- de 0,05 à 5 % en mole de motifs dérivés d'au moins un monomère acrylique contenant un radical 2,4,6 triphénéthyl benzène, et
- de 0 à 0,2 % en mole de motifs dérivés d'au moins un monomère polyinsaturé.

2. Polymère acrylique associatif selon la revendication 1 caractérisé en ce que le monomère acrylique contenant un radical tristyryl phénol est choisi dans la famille répondant à la formule : 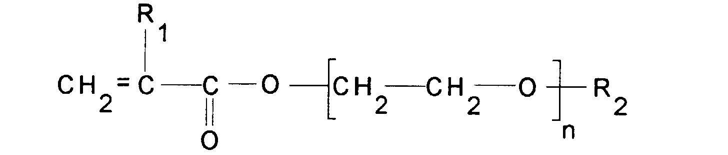 dans laquelle :
R₁ représente un H ou un CH₃
R₂ est le 2,4,6 triphénéthyl benzène
n est un nombre entier compris entre 2 et 50 et de préférence entre 8 et 18.

3. Polymère acrylique associatif selon la revendication 2 caractérisé en ce que le monomère acrylique contenant un radical 2,4,6 triphénéthyl benzène est le méthacrylate de polyoxyéthylène 2,4,6 triphénéthyl benzène.

4. Procédé de synthèse du polymère acrylique associatif de la revendication 1 par polymérisation en émulsion inverse d'un mélange contenant :
- de 95 à 99,95 % en mole d'au moins un monomère choisi dans le groupe constitué de monomères éthyléniques neutres, de monomères anioniques et/ou cationiques,
- de 0,05 à 5 % en mole d'au moins un monomère acrylique contenant un radical tristyryl phénol, et
- de 0 à 0,2 % en mole d'au moins un monomère polyinsaturé en présence d'un tensio actif de HLB compris entre 3 et 10.

5. Procédé selon la revendication 4 caractérisé en ce que le monomère acrylique contenant un radical 2,4,6 triphénéthyl benzène est choisi dans la famille répondant à la formule : 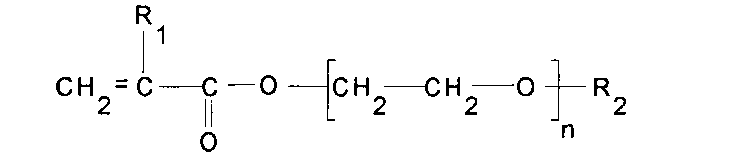 dans laquelle :
R₁ représente un H ou un CH₃
R₂ est le 2,4,6 triphénéthyl benzène
n est un nombre entier compris entre 2 et 50 et de préférence entre 8 et 18.

6. Procédé selon la revendication 5 caractérisé en ce que le monomère acrylique contenant un radical 2,4,6 triphénéthyl benzène est le méthacrylate de polyoxyéthylène 2,4,6 triphénéthyl benzène oxyéthylé à 12 moles d'oxyde d'éthylène.

7. Procédé selon l'une quelconque des revendications 4 à 6 caractérisé en ce que les monomères à polymériser représentent de 20 à 60 % en poids et de préférence de 30 à 50 % en poids de la solution, et en ce que le rapport pondéral de la phase aqueuse et de la phase organique est de 0,5 à 3 et de préférence de 0,8 à 1,2.

8. Composition à utiliser comme épaississant, agent de floculation et/ou agent de rétention de charges contenant les polymères des revendications 1 à 4.
